# EUROPÄISCHE PATENTANMELDUNG

(11) **EP 2 441 974 A2**
(43) Veröffentlichungstag der Anmeldung: **18.04.2012**
(21) Anmeldenummer: 11007703.9
(22) Anmeldetag: 22.09.2011
(51) Int. Cl.: F16C 33/80, F16C 19/16

(54) **Wälzlageranordnung**

(30) Priorität: 18.10.2010 DE 102010048835
(71) Anmelder: Schaeffler Technologies AG & Co. KG, 91074 Herzogenaurach (DE)
(72) Erfinder: Smetana, Tomas, Dr., 91074 Herzogenaurach (DE); Radinger, Norbert, 90475 Nürnberg (DE)

(57) **Zusammenfassung**

Wälzlageranordnung (1), insbesondere Ausrücklageranordnung, umfassend ein Wälzlager (2) mit einem Außenring (3), einem Innenring (4) und zwischen dem Außenring und dem Innenring in einem Wälzkörperaufnahmeraum (6) wälzenden Wälzkörpern (5) sowie einer an einer Seite des Wälzkörperaufnahmeraums ausgebildeten Spaltdichtung (7), wobei der Außenring (3) einen sich radial erstreckenden flanschartigen Abschnitt (8) aufweist, welcher in einen dazu gewinkelt verlaufenden, sich axial erstreckenden und in einen zylindrischen Innenringabschnitt (9) eingreifenden zylindrischen Kragenabschnitt (10) übergeht, wobei die Spaltdichtung (7) im Eingriffsbereich zwischen Kragenabschnitt (10) und Innenringabschnitt (9) ausgebildet ist und der Kragenabschnitt (10) in den Innenringabschnitt (9) wenigstens um ein Viertel der axialen Länge des Innenringabschnitts (9) eingreift.

## Beschreibung

### 1.2.2 Gebiet der Erfindung

Die Erfindung betrifft eine Wälzlageranordnung, insbesondere Ausrücklageranordnung, umfassend ein Wälzlager mit einem Außenring, einem Innenring und zwischen dem Außenring und dem Innenring in einem Wälzkörperaufnahmeraum wälzenden Wälzkörpern sowie einer an einer Seite des Wälzkörperaufnahmeraums ausgebildeten Spaltdichtung.

### 1.3 Hintergrund der Erfindung

Wälzlageranordnungen sind in einer Vielzahl unterschiedlicher Bauarten und Anwendungsgebieten bekannt. Beispielsweise können diese in Form sowohl radiale als auch axiale Belastungen aufnehmender Schrägkugellager in Ausrücklageranordnungen, d. h. als Ausrücklager eingesetzt werden.

Um einen unerwünschten Austritt von Lagerschmiermitteln, welche vornehmlich zur Reduzierung von Reibung und Verschleiß und somit zur Verbesserung der Laufeigenschaften des Wälzlagers beitragen, zu verhindern, sind beispielsweise Spaltdichtungen bekannt, die den die Wälzkörper aufnehmenden Wälzkörperaufnahmeraum abdichten. Spaltdichtungen gehören zu den sogenannten berührungslosen Dichtungen und umfassen wenigstens einen engen kanalartigen axial und/oder radial verlaufenden Spalt. Jedoch ist mit Spaltdichtungen eine komplette Abdichtung des Wälzlagers nicht immer erzielbar. Insofern kann es möglich sein, dass mit gängigen Spaltdichtungen eine wünschenswerte Abdichtung des Wälzlagers nicht erreicht wird.

### 1.4 Zusammenfassung der Erfindung

Der Erfindung liegt damit das Problem zugrunde, eine Wälzlageranordnung mit einer verbesserten Abdichtung des Wälzkörperaufnahmeraums anzugeben.

Zur Lösung dieses Problems ist bei einer Wälzlageranordnung der eingangs genannten Art erfindungsgemäß vorgesehen, dass der Außenring einen sich radial erstreckenden flanschartigen Abschnitt aufweist, welcher in einen dazu gewinkelt verlaufenden, sich axial erstreckenden und in einen zylindrischen Innenringabschnitt eingreifenden zylindrischen Kragenabschnitt übergeht, wobei die Spaltdichtung im Eingriffsbereich zwischen Kragenabschnitt und Innenringabschnitt ausgebildet ist und der Kragenabschnitt in den Innenringabschnitt wenigstens um ein Viertel der axialen Länge des Innenringabschnitts eingreift.

Der Erfindung liegt die Erkenntnis zugrunde, dass die Dichtwirkung einer Spaltdichtung im Wesentlichen durch eine axiale Verlängerung radialer Spaltdichtungen bildender Spalträume verbessert werden kann, da es sich zeigte, dass die Dichtwirkung von Spaltdichtungen vornehmlich von den sich radial erstreckenden Spalträumen bzw. Spaltdichtungsabschnitten abhängt.

Derart kann durch eine Vergrößerung, d. h. eine axiale Verlängerung der radialen Spalträume die Dichtwirkung entsprechender Spaltdichtungen erhöht werden. Dies wird erfindungsgemäß durch eine besondere Ausbildung des dem Außenring zugehörigen, in den zylindrischen Innenringabschnitt unter Ausbildung eines Radialspalts eingreifenden Kragenabschnitts erreicht, indem dieser in den Innenringabschnitt wenigstens um ein Viertel der axialen Länge des Innenringabschnitts eingreift. Mithin beträgt also die axiale Länge des Kragenabschnitts mehr als ein Viertel der Länge des Innenringabschnitts, so dass der Bereich, in dem der Kragenabschnitt und der Innenringabschnitt parallel zueinander verlaufen, verlängert ist. Selbstverständlich sind Ausnahmen möglich, d. h. der Übergriffsbereich kann in bestimmten Situationen auch etwas geringer als ein Viertel der axialen Länge des Innenringabschnitts sein, wenngleich erfindungsgemäß ein Maximum an axialer Übergriffslänge angestrebt ist.

Die Erfindung stellt sonach ein einfach und kostengünstig realisierbares Prinzip zur Verbesserung der Abdichtung eines Wälzlagers bereit, welches den Austritt von Lagerschmiermitteln aus dem Wälzkörperaufnahmeraum weiter reduziert.

Bevorzugt greift der Kragenabschnitt in den Innenringabschnitt wenigstens um die Hälfte der axialen Länge des Innenringabschnitts ein. Wie erwähnt, ist ein Höchstmaß an Übergriffslänge anzustreben, um die Dichtheit der erfindungsgemäßen Wälzlageranordnung zu verbessern, weshalb auch Übergriffslängen von mehr als der Hälfte der axialen Länge des Innenringabschnitts denkbar sind. In extremen Fällen kann der Kragenabschnitt axial betrachtet auch länger als der Innenringabschnitt sein.

In Weiterbildung der Erfindung können in dem der Spaltdichtung gegenüberliegenden Bereich des Wälzlagers ebenfalls Dichtmittel, d. h. z. B. Spaltdichtungen, Labyrinthdichtungen, etc. vorgesehen sein, um das Wälzlager auch hier entsprechend abzudichten.

Die Spaltdichtung kann ferner in einen sich axial zwischen dem freien Ende des Innenrings und dem flanschartigen Abschnitt erstreckenden Spaltdichtungsabschnitt münden. Derart ist der vom Schmiermittel zurückzulegende Weg, um aus dem Wälzlager bzw. dem Wälzkörperaufnahmeraum zu gelangen, zusätzlich vergrößert, was der Dichtwirkung der Spaltdichtung weiter förderlich ist. Der axiale Spaltdichtungsabschnitt kann auch gewinkelt zur Längsachse der Wälzlageranordnung verlaufen und/oder labyrinthartig ausgebildete Abschnitte aufweisen, was gleichermaßen den Anteil der Dichtwirkung der Spaltdichtung erhöht.

Es ist zudem möglich, dass ein mit einem weiteren Bauteil der Wälzlageranordnung verbundenes Halteelement vorgesehen ist, wobei ein diesem zugehöriger, sich parallel zu dem Kragenabschnitt wenigstens abschnittsweise über dessen axiale Länge erstreckender Befestigungsabschnitt mit dem weiteren Bauteil verbunden ist und ein von dem Befestigungsabschnitt in radialer Richtung abstehender Begrenzungsabschnitt axial benachbart zu dem freien Ende des Kragenabschnitts verläuft. Das Halteelement in Form einer Montage- oder Transporthalterung dient der Halterung des Kragenabschnitts bzw. des gesamten Wälzlagers, insbesondere in Montage- oder Transportsituationen. Entsprechend besteht die Möglichkeit, dieses nach entsprechenden Vorgängen aus der Wälzlageranordnung zu entfernen, wobei es jedoch in bestimmten Fällen ebenso in der Wälzlageranordnung verbleiben kann.

Die erfindungsgemäße Anordnung des Halteelements ist dergestalt, dass das querschnittlich im Wesentlichen L-förmige Halteelement mit seinem langen Abschnitt, d. h. dem Befestigungsabschnitt an einem weiteren Bauteil der Wälzlageranordnung, beispielsweise einem Befestigungsflansch, angeordnet ist, und parallel zu dem Kragenabschnitt bzw. Innenringabschnitt verläuft, wohingegen dessen kurzer Abschnitt, d. h. der Begrenzungsabschnitt winklig, d. h. bevorzugt um 90° gewinkelt radial nach außen absteht, wobei er abschnittsweise axial benachbart zu dem freien Ende des Kragenabschnitts verläuft. Demnach ist es aufgrund der Bauraumsituation innerhalb der erfindungsgemäßen Wälzlageranordnung vorgesehen, dass der Befestigungsabschnitt des Halteelements entsprechend dem Kragenabschnitt verlängert wird, was dessen stabiler Anbringung, welche vorteilhaft über einen radialen Presssitz erfolgt, zuträglich ist. Es handelt sich sonach um eine bauraumneutrale Lösung für die Anordnung des Halteelements, wobei durch höhere Haltekräfte, insbesondere über den verlängerten Presssitz, eine höhere Montagesicherheit erzielt werden kann. Neben Pressverbindungen sind selbstverständlich auch andere Verbindungsarten möglich.

Daneben betrifft die Erfindung eine Wälzlageranordnung, insbesondere Ausrücklageranordnung, umfassend ein Wälzlager mit einem Außenring, einem Innenring und zwischen dem Außenring und dem Innenring in einem Wälzkörperaufnahmeraum wälzenden Wälzkörpern sowie einer an einer Seite des Wälzkörperaufnahmeraums ausgebildeten Spaltdichtung, insbesondere wie vorstehend beschrieben, wobei der Wälzkörperaufnahmeraum an der der Spaltdichtung axial gegenüberliegenden Seite mittels einer Labyrinthdichtung abgedichtet ist, wobei zur Bildung der Labyrinthdichtung zwei wenigstens abschnittsweise parallel verlaufende und sich dabei über eine axiale Länge gegenseitig übergreifende Ringelement vorgesehen sind, wobei sich ein erstes Ringelement vom Innenring in Richtung des Außenrings und ein zweites Ringelement vom Außenring in Richtung des Innenrings erstreckt und am Außenumfang des Außenrings befestigt ist.

Diese erfindungsgemäße Ausgestaltung einer Wälzlageranordnung zeigt durch die berührungslose Labyrinthdichtung ebenso ein hohes Maß an Dichtheit, so dass das unerwünschte Auslaufen bzw. Austreten eines Schmiermittels aus dem Wälzkörperaufnahmeraum reduziert wird. Dabei ist an der der Labyrinthdichtung gegenüberliegenden Seite des Wälzkörperaufnahmeraums eine Spaltdichtung vorgesehen, so dass das Wälzlager an einer Seite über die Labyrinthdichtung und an einer dieser gegenüberliegenden Seite über eine Spaltdichtung abgedichtet ist. Die erfindungsgemäße Wälzlageranordnung gemäß dieser zweiten Ausführungsform kann als separate Lösung für eine verbesserte Dichtwirkung angesehen werden, sie trägt aber auch mit der vorstehend beschriebenen Ausführungsform mit der neuen erfindungsgemäßen Spaltdichtung gemeinsam zu einer erhöhten Dichtwirkung eines Wälzlagers bei.

Bevorzugt ist die Labyrinthdichtung über zwei wenigstens abschnittsweise parallel verlaufende Ringelemente gebildet, welche sich über eine axiale Länge gegenseitig übergreifen. Dabei ist ein erstes Ringelement vorteilhaft dem Innenring zugeordnet und erstreckt sich von diesem in Richtung des Außenrings. Ein zweites Ringelement ist vorteilhaft dem Außenring zugeordnet und erstreckt sich von diesem in Richtung des Innenrings, wobei das zweite Ringelement vorteilhaft am Außenumfang des Außenrings befestigt ist. Die Anordnung des zweiten Ringelements am Außenumfang des Außenrings ermöglicht eine vereinfachte Montage des zweiten Ringelements, da dieses an einer in der Regel gut zugänglichen Stelle des Wälzlagers angebracht wird.

Die Befestigung des zweiten Ringelements am Außenring ist bevorzugt über eine Pressverbindung, insbesondere durch Aufpressen oder Verstemmen, oder durch Bördeln gebildet. Bei einer Pressverbindung handelt es sich prinzipiell um eine kraftschlüssige Verbindung, welche durch eine besondere Ausgestaltung der zu verpressenden Oberflächen, beispielsweise durch eine dreidimensionale Strukturierung, in eine noch stabilere kraft-formschlüssige Verbindung überführt werden kann. Daneben sind durch Umformen erzeugte Bördelungen des zweiten Ringelements am Außenumfang des Außenrings denkbar. Der Außenumfang des Außenrings kann über eine entsprechend ausgebildete Oberfläche mit Ansätzen oder dergleichen verfügen, um die Stabilität der Verbindung mit dem zweiten Ringelement weiter zu erhöhen. Andere Fügeverfahren zur Anbringung des zweiten Ringelements am Außenumfang des Außenrings sind grundsätzlich denkbar.

Es ist vorteilhaft, wenn das zweite Ringelement zur Befestigung in einen am Außenumfang des Außenrings ausgebildeten Hinterschnitt, insbesondere eine Nut, eingreift. Derart kann die Festigkeit der Verbindung des zweiten Ringelements am Außenumfang weiter gesteigert werden, da dieses mechanisch in dem Hinterschnitt respektive der Nut oder einer sonstigen Aussparung verankert wird.

In Weiterbildung der Erfindung können die Ringelemente wenigstens abschnittsweise gewinkelt zur Lagerlängsachse verlaufen. Die gewinkelt verlaufenden Abschnitte der Ringelemente tragen dazu bei, dass der Außenring gegebenenfalls in axialer Richtung verkürzt werden kann, so dass das Wälzlager insgesamt gewichtsoptimierte Eigenschaften aufweist. Gleichermaßen bewirkt der gewinkelte Verlauf der Ringelementabschnitte eine Verlängerung des Weges durch die durch diese gebildete Labyrinthdichtung, was deren Dichtwirkung erhöht. Es ist eine Vielzahl an Winkeln bezüglich der Lagerlängsachse möglich, lediglich beispielhaft sei ein Winkel von 45° zur Lagerlängsachse genannt.

### 1.5 Kurze Beschreibung der Zeichnung

Ein Ausführungsbeispiel der Erfindung ist in der Zeichnung dargestellt und wird im Folgenden näher beschrieben. Es zeigt:

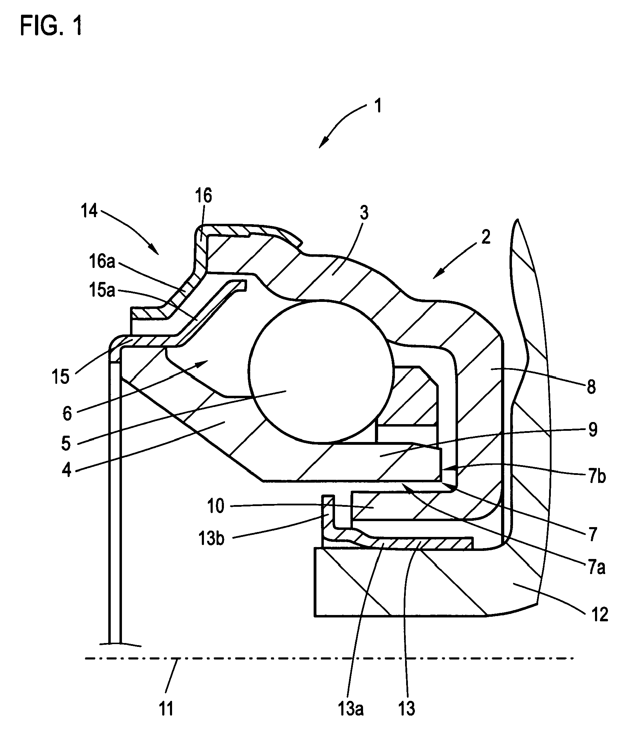

Figur 1 eine Schnittansicht durch eine Wälzlageranordnung einer beispielhaften Ausführungsform.

### 1.6 Ausführliche Beschreibung der Zeichnung

Figur 1 zeigt eine Schnittansicht durch eine Wälzlageranordnung 1 einer beispielhaften Ausführungsform. Die Wälzlageranordnung 1 kann vorteilhaft als Teil einer Ausrücklageranordnung (nicht gezeigt) dienen und besteht im Wesentlichen aus dem als Schrägkugellager ausgebildeten Wälzlager 2, umfassend den Außenring 3, den konzentrisch dazu angeordneten Innenring 4 sowie kugelförmige Wälzkörper 5, die in einem Wälzkörperaufnahmeraum 6 zwischen dem Außenring 3 und dem Innenring 4 angeordnet sind. Im rechten Bereich des Wälzkörperaufnahmeraums 6 ist eine Spaltdichtung 7 durch einen dem Außenring 3 zugehörigen radialen flanschartigen Abschnitt 8, welcher in einen dazu gewinkelt verlaufenden, sich axial erstreckenden und in einen zylindrischen Innenringabschnitt 9 eingreifenden zylindrischen Kragenabschnitt 10 übergeht, gebildet. Ersichtlich weist die Spaltdichtung 7 zwei Spaltdichtungsabschnitte 7a, 7b, auf, wobei der erste Spaltdichtungsabschnitt 7a einen radialen Spaltraum und der zweite Spaltdichtungsabschnitt 7b einen axialen Spaltraum bezüglich der Lagerachse 11 bildet.

Dabei ist, wie sich aus Untersuchungen zeigte, der im Eingriffsbereich zwischen Kragenabschnitt 10 und Innenringabschnitt 9 ausgebildete erste Spaltdichtungsabschnitt 7a maßgeblich für die Dichtwirkung der Spaltdichtung 7 verantwortlich, weshalb dieser erfindungsgemäß axial verlängert ist, d. h. der Kragenabschnitt 10 greift in den Innenringabschnitt 9 beispielsweise um die Hälfte der axialen Länge des Innenringabschnitts 9 ein. Ersichtlich könnte der Kragenabschnitt 10 axial gesehen prinzipiell noch weiter verlängert werden.

Im vorliegenden Ausführungsbeispiel ist die axiale Ausdehnung des Kragenabschnitts 10 durch ein mit einem flanschartigen Abschnitt 12 eines weiteren Bauteils der Wälzlageranordnung 1 verbundenes L-förmiges Halteelement 13 begrenzt. Dieses weist einen Begrenzungsabschnitt 13a benachbart zu dem freien Ende des Kragenabschnitts 10 und einen Befestigungsabschnitt 13b zur Anbringung an dem flanschartigen Abschnitt 12 auf. Ersichtlich erstreckt sich der Befestigungsabschnitt 13a parallel zu dem Kragenabschnitt 10 bzw. dem Innenringabschnitt 9. Das Halteelement 13 ist eine Montage- oder Transporthalterung, die bevorzugt über eine Pressverbindung mit dem flanschartigen Abschnitt 12 verbunden ist. Die Verbindung kann gegebenenfalls lösbar sein, so dass das Halteelement 13 von dem flanschartigen Abschnitt 12 abnehmbar ist.

An der der Spaltdichtung 7 axial gegenüberliegenden Seite ist der Wälzkörperaufnahmeraum 6 des Wälzlagers 2 mittels einer Labyrinthdichtung 14 abgedichtet. Die Labyrinthdichtung 14 ist durch zwei Ringelemente 15, 16 gebildet. Dabei ist das erste, sich vom Innenring 4 radial nach außen in Richtung des Außenrings 3 erstreckende Ringelement 15 dem Innenring 4, d. h. dem von dessen zylindrischem Innenringabschnitt 9 radial abstehenden Abschnitt zugeordnet und entsprechend am Außenumfang des Innenrings 4 befestigt. Das zweite, sich vom Außenring 3 radial nach innen in Richtung des Innenrings 4 erstreckende Ringelement 16 ist dem Außenring 3 zugeordnet und an dessen Außenumfang befestigt. Der Außenring 3 kann axial betrachtet gekürzt werden, wodurch ohne mechanische Einbußen gegebenenfalls Gewicht reduziert werden kann. Die Befestigung der Ringelemente 15, 16 kann beispielsweise über eine axiale wie auch radiale Kräfte aufnehmende Pressverbindung oder durch Bördeln (vgl. Ringelement 16) erfolgen. Die Ringelemente 15, 16 weisen abschnittsweise parallel verlaufende Ringelementabschnitte 15a, 16a auf, welche sich über eine bestimmte axiale Länge gegenseitig übergreifen, wobei die Ringelemente 15, 16 respektive deren sich übergreifende Ringelementabschnitte 15a, 16a im Bereich ihres Übergriffs abschnittsweise schräg, d.h. beispielsweise um einen Winkel von ca. 45° gewinkelt zur Lagerachse 11 verlaufen.

### Bezugszahlenliste

- 1: Wälzlageranordnung
- 2: Wälzlager
- 3: Außenring
- 4: Innenring
- 5: Wälzkörper
- 6: Wälzkörperaufnahmeraum
- 7: Spaltdichtung
- 7a: Spaltdichtungsabschnitt
- 7b: Spaltdichtungsabschnitt
- 8: flanschartiger Abschnitt
- 9: Innenringabschnitt
- 10: Kragenabschnitt
- 11: Lagerachse
- 12: flanschartiger Abschnitt
- 13: Halteelement
- 13a: Befestigungsabschnitt
- 13b: Begrenzungsabschnitt
- 14: Labyrinthdichtung
- 15: erstes Ringelement
- 15a: Ringelementabschnitt
- 16: zweites Ringelement
- 16a: Ringelementabschnitt

## Patentansprüche

1. Wälzlageranordnung, insbesondere Ausrücklageranordnung, umfassend ein Wälzlager mit einem Außenring, einem Innenring und zwischen dem Außenring und dem Innenring in einem Wälzkörperaufnahmeraum wälzenden Wälzkörpern sowie einer an einer Seite des Wälzkörperaufnahmeraums ausgebildeten Spaltdichtung, **dadurch gekennzeichnet, dass** der Außenring (3) einen sich radial erstreckenden flanschartigen Abschnitt (8) aufweist, welcher in einen dazu gewinkelt verlaufenden, sich axial erstreckenden und in einen zylindrischen Innenringabschnitt (9) eingreifenden zylindrischen Kragenabschnitt (10) übergeht, wobei die Spaltdichtung (7) im Eingriffsbereich zwischen Kragenabschnitt (10) und Innenringabschnitt (9) ausgebildet ist und der Kragenabschnitt (10) in den Innenringabschnitt (9) wenigstens um ein Viertel der axialen Länge des Innenringabschnitts (9) eingreift.

2. Wälzlageranordnung nach Anspruch 1, **dadurch gekennzeichnet, dass** der Kragenabschnitt (10) in den Innenringabschnitt (9) wenigstens um die Hälfte der axialen Länge des Innenringabschnitts (9) eingreift.

3. Wälzlageranordnung nach Anspruch 1 oder 2, **dadurch gekennzeichnet, dass** die Spaltdichtung (7) in einen sich axial zwischen dem freien Ende des Innenrings (4) und dem flanschartigen Abschnitt (8) erstreckenden Spaltdichtungsabschnitt (7b) mündet.

4. Wälzlageranordnung nach einem der vorangehenden Ansprüche, **dadurch gekennzeichnet, dass** ein mit einem weiteren Bauteil der Wälzlageranordnung (1) verbundenes Haltelement (13) vorgesehen ist, wobei ein diesem zugehöriger, sich parallel zu dem Kragenabschnitt (10) wenigstens abschnittsweise über dessen axiale Länge erstreckender Befestigungsabschnitt (13a) mit dem weiteren Bauteil verbunden ist und ein von dem Befestigungsabschnitt (13a) in radialer Richtung abstehender Begrenzungsabschnitt (13b) axial benachbart zu dem freien Ende des Kragenabschnitts (10) verläuft.

5. Wälzlageranordnung nach Anspruch 4, **dadurch gekennzeichnet, dass** der Befestigungsabschnitt (13a) über eine Pressverbindung mit dem weiteren Bauteil verbunden ist.

6. Wälzlageranordnung, insbesondere Ausrücklageranordnung, umfassend ein Wälzlager mit einem Außenring, einem Innenring und zwischen dem Außenring und dem Innenring in einem Wälzkörperaufnahmeraum wälzenden Wälzkörpern sowie einer an einer Seite des Wälzkörperaufnahmeraums ausgebildeten Spaltdichtung, insbesondere nach einem der vorangehenden Ansprüche, **dadurch gekennzeichnet, dass** der Wälzkörperaufnahmeraum (6) an der der Spaltdichtung (7) axial gegenüberliegenden Seite mittels einer Labyrinthdichtung (14) abgedichtet ist, wobei zur Bildung der Labyrinthdichtung (14) zwei wenigstens abschnittsweise parallel verlaufende und sich dabei über eine axiale Länge gegenseitig übergreifende Ringelemente (15, 16) vorgesehen sind, wobei sich ein erstes Ringelement (15) vom Innenring (4) in Richtung des Außenrings (3) und ein zweites Ringelement (16) vom Außenring (3) in Richtung des Innenrings (4) erstreckt und am Außenumfang des Außenrings (3) befestigt ist.

7. Wälzlageranordnung nach Anspruch 6, **dadurch gekennzeichnet, dass** die Befestigung des zweiten Ringelements (16) über eine Pressverbindung, insbesondere durch Aufpressen oder Verstemmen, oder durch Bördeln gebildet ist.

8. Wälzlageranordnung nach Anspruch 6 oder 7, dass das zweite Ringelement (16) zur Befestigung in einen am Außenumfang des Außenrings (3) ausgebildeten Hinterschnitt, insbesondere eine Nut, eingreift.

9. Wälzlageranordnung nach einem der Ansprüche 6 bis 8, **dadurch gekennzeichnet, dass** die Ringelemente (15, 16) wenigstens abschnittsweise gewinkelt zur Lagerlängsachse (11) verlaufen.
